# EUROPÄISCHE PATENTSCHRIFT

(11) **EP 1 261 815 B1**
(45) Veröffentlichungstag und Bekanntmachung des Hinweises auf die Patenterteilung: **08.09.2004**
(21) Anmeldenummer: 01913828.8
(22) Anmeldetag: 22.02.2001
(51) Int. Cl.: F16H 49/00

(54) **WELLGETRIEBE UND INNENRÄDER FÜR EIN SOLCHES GETRIEBE**
HARMONIC DRIVE AND INTERNAL GEARED WHEELS FOR A DRIVE OF THIS TYPE
REDUCTEUR A PLANETAIRE ET ROUES A DENTURE INTERIEURE DESTINEES A CE DERNIER

(30) Priorität: 04.03.2000 DE 10010680
(43) Veröffentlichungstag der Anmeldung: 04.12.2002
(73) Patentinhaber: Oechsler Aktiengesellschaft, 91522 Ansbach (DE)
(72) Erfinder: BÖGELEIN, Joseph, 91623 Sachsen b. Ansbach (DE); PÖHLAU, Frank, 90762 Fürth (DE)
(74) Vertreter: Führing, Dieter
(86) Internationale Anmeldenummer: PCT/EP2001/002038
(87) Internationale Veröffentlichungsnummer: WO 2001/066976

(56) Entgegenhaltungen:
- EP-A- 0 974 773
- DE-A- 19 912 761
- DE-C- 19 650 716
- DE-U- 9 109 077
- DE-U- 29 614 738

## Beschreibung

Die Erfindung betrifft ein Wellgetriebe und Innenräder für solche Getriebe gemäß dem jeweiligen Oberbegriff der Hauptansprüche, wie insoweit aus der ein Exzentergetriebe mit Überlastungsschutz betreffenden DE 1 96 50 716 C1 bekannt.

Die Funktion eines solchen - auch als Harmonic Drive oder als Ringband-Getriebe bekannten - Exzenter- oder Wellgetriebes als sehr stark untersetzendem, selbsthemmendem System mit zur Antriebswelle koaxialer Abtriebswelle beruht darauf, daß ein rotierender sogenannter Well-Generator einen auch als Flexband bezeichneten Innenrad-Reifen umlaufend radial verformt und dadurch dessen Außenmantelfläche umlaufend lokal nach außen gegen die hohlzylindrische Innenmantelfläche geringfügig größeren Umfanges eines stationären, formstabilen Stützrings andrückt. Infolgedessen wälzt sich das Innenrad selbst oder sein darauf verdrehbar gelagerter Radreifen kraftschlüssig über Reibflächen oder formschlüssig über Verzahnungen im Stützring ab, wobei das Rad bzw. sein Reifen sich nach Maßgabe der Umfangsdifferenz langsamer als der motorisch angetriebene Triebkern des Wellgenerators dreht. Diese gegenüber dem Antrieb stark verlangsamte Drehbewegung wird vorzugsweise über die Außenverzahnung des Radreifens auf die Innenverzahnung eines weiteren hohlzylindrischen Außenringes, des zum Stützring konzentrischen aber nicht stationären Abtriebsringes übertragen. Der Antrieb des Well-Generators erfolgt üblicherweise über einen koaxial angeflanschten hochtourigen und deshalb preiswert verfügbaren Kleinspannungs-Gleichstrommotor, dessen Rotation so in eine sehr viel langsamere Drehbewegung entsprechend größeren Drehmomentes untersetzt wird.

Bei den vom Deutschen Gebrauchsmuster 2 96 14 738 bekannten und in dem Beitrag "Genial einfach" von H. Hirn (KEM Antriebstechnik Heft 11/1996) näher beschriebenen Ausführungsformen solcher Wellgetriebe wird als Wellgenerator ein unrunder (im Axial-Querschnitt etwa dreieckförmiger oder bevorzugt ovaler) Triebkern konzentrisch in der Nabe des radial verformbaren Innenrades gedreht. Als radial orientierte Stößel wirkende, formstabile Speichen zwischen der vom Triebkern radial verformten Nabe und dem ebenfalls radial verformbaren, außen verzahnten Reifen dieses Innenrades bewirken, daß die Außenverzahnung entsprechend ihrer umlaufenden radialen Verformung jeweils nur über ein darin abwälzendes begrenztes Bogenstück mit der Innenverzahnung des Stützringes in Eingriff gerät.

Die Formstabilität der Speichen muß vor allem in radialer Richtung gewährleistet sein, um die vom Wellgenerator hervorgerufene, umlaufende Radialverformung der Nabe, die in der gattungsbildenden Vorveröffentlichung als Innenrad bezeichnet wird, auf den Reifen (das dort sogenannte Außenrad) übertragen zu können. Beim unter Last stattfindenden Abwälzvorgang des Reifens im Stützring werden die dort linearen, als in Umfangsrichtung flexibel bezeichneten Speichen dieses Segmentes an ihren beiderseitigen Enden aber auch auf Biegung beansprucht. Wenn sie sich dann in Umfangsrichtung aus der Radialrichtung heraus verbiegen, verkleinert sich der Durchmesser des Reifens, bis er außer Eingriff mit dem Stützring gerät. So wirken die Speichen als Überlastungsschutz am Wellgetriebe.

Der Erfindung liegt die technische Problemstellung zugrunde, unter Beibehaltung seiner apparativen und anwendungsorientierten Vorteile das vorbekannte Wellgetriebe bzw, sein Innenrad dahingehend weiterzuentwickeln, daß es insbesondere in Hinblick auf die kinetischen Gegebenheiten beim Ansprechen der Überlastsicherung noch wesentlich flexibler auslegbar und dadurch vielseitiger einsetzbar ist.

Gelöst ist diese Aufgabenstellung erfindungsgemäß dadurch, daß das gattungsgemäße Wellgetriebe bzw. sein Innenrad mit den Merkmalen des jeweiligen Hauptanspruches ausgelegt ist. Danach ist das Innenrad weiterhin mit Speichen ausgestattet, die bei kritischer Beanspruchung in Umfangsrichtung nicht mehr formstabil sind; wobei nun aufgrund ihrer besonderen, erfindungsgemäßen Formgebung oder Materialkombination ein drehmomentenabhängiges - optional auch ein drehrichtungsabhängiges - Ansprechen dieser Sicherungsfunktion gegen Überlastung hinsichtlich vieler Parameter gezielt konstruktiv beeinflußbar ist. Eine solche rückführbare Verformung tritt wie erwähnt je nach der Biegesteifigkeit der Speiche auf, wenn das ihrer radialen Orientierung zugeordnete Segment des Radreifens gerade mit dem Stützring in Eingriff steht und beim Abwälzvorgang deshalb eine konstruktiv vorgegebene kritische Biegebeanspruchung dieser Speiche überschritten wird.

Dabei kann die Verformbarkeit der Speichen also von der Drehrichtung des Triebkernes in der Radnabe unabhängig ausgelegt sein, so daß sich gewissermaßen die Funktion einer in beiden Antriebsrichtungen wirksamen Überlastsicherung oder Rutschkupplung einstellt. Diese Funktion kann andererseits auch drehrichtungsabhängig vorgegeben sein, indem die Speiche aufgrund ihrer Geometrie oder Materialkombination in der einen Drehrichtung eine andere Biegesteifigkeit, als entgegengesetzt aufweist - bis hin zur Freilaufeigenschaft in der einen Richtung mit Kraftübertragung allein in der vorgegebenen anderen, der Arbeitsrichtung. Denn die Verformung des unter Überlast bzw. in Gegendrehrichtung nun nicht mehr biegesteifen Speichenschaftes verkürzt die radial wirksame Speichenlänge des Innenrades und damit die lokale Radialverformung des Rad-Reifens, also dessen Verzahnungseingriff mit dem Stützrad, der dann durchratscht und damit außer Eingriff gerät, wodurch die Kraft- und Bewegungsübertragung über das Wellgetriebe unterbrochen wird.

Im Ergebnis wird durch die erfindungsgemäßen Maßnahmen also infolge Beeinflussung des Verzahnungseingriffes der Verzahnungsparameter am Radreifen (Flexband) so verändert, daß bei Überschreiten des maximal vorgegebenen Drehmomentes ein Überratschen der Verzahnung eintritt. Das führt zum Stillstand des Getriebes bei Überlast, wobei diese Momentenbegrenzung durch einknickende Speichen bis hin zur Freilauffunktion infolge gegenüber der Radialen schräggestellter oder infolge abklappender Speichen auch richtungsabhängig sein kann, ohne daß vor oder nach dem Wellgetriebe dafür noch zusätzliche Funktionsbaugruppen eingesetzt werden müssen.

Bezüglich weiterer Einzelheiten und zusätzlicher Weiterbildungen der Erfindung wird auf die nachstehende Beschreibung von bevorzugten Realisierungsbeispielen zur erfindungsgemäßen Lösung und auf die weiteren Ansprüche verwiesen und zur Ergänzung der Offenbarung auch auf die beiden eigenen heutigen deutschen Patentanmeldungen mit gleicher Bezeichnung Bezug genommen. In der Zeichnung zeigt, nicht ganz maßstabsgerecht vergrößert und auf das Funktionswesentliche vereinfacht bei stark vergröberter Verzahnungsgeometrie :
- Fig.1: die obere Hälfte eines im gehäusefesten Stützring sich abwälzenden Radreifens auf einem Wellgetriebe-Innenrad mit massiven quaderförmigen, infolge bezüglich der Getriebeachse achsparalleler Querteilung ihres Schaftes, eventuell drehrichtungsabhängig, biegeweichen Speichen,
- Fig.2: beidseitig elastisch (a) und einfach elastisch (b) sowie einseitig verschwenkbar (c) gekoppelte Teilspeichen aus Fig.1,
- Fig.3: in Abwandlung von Fig.2 (a) die untere Hälfte eines im gehäusefesten Stützring sich abwälzenden Radreifens auf einem Wellgetriebe-Innenrad mit infolge bezüglich der Getriebeachse radialer Schlitze, eventuell drehrichtungsunabhängig, biegeweichen Speichen,
- Fig.4 bzw. Fig.5: in Abwandlung von Fig.3 die obere bzw. in Abwandlung von Fig.4 die untere Hälfte eines im gehäusefesten Stützring sich abwälzenden Radreifens auf einem Wellgetriebe-Innenrad mit infolge gegenüber der Radialrichtung auf die Getriebeachse geschwungenen Verlaufes drehrichtungsabhängig biegeweicher Speiche.

Die Zeichnung veranschaulicht in jeweils abgebrochener Axialschnitt-Darstellung Ansichten gegen die Stirnenden 13 verschiedener jeweils mit einer Vielzahl untereinander gleicher Speichen 21 ausgestatteter Innenräder 15 innerhalb ihres jeweils gehäusefesten, formstabil hohlzylindrischen Stützringes 11 von Wellgetrieben 12.

Für jedes der skizzierten Wellgetriebe 12 gilt, daß dessen unrunder (wie dargestellt bevorzugt im Axial-Querschnitt ovaler) formstabiler Triebkern 14 das radial verformbare Innenrad 15 mit seinem Rad-Reifen 13 koaxial durchsetzt. In den im Innenrad 15 konzentrisch verdrehbaren Triebkern 14 seinerseits greift wieder koaxial zur Getriebe-Achse 24 aber nun drehfest eine Antriebswelle 16 ein, bei der es sich unmittelbar um die verlängerte Motorwelle eines Antriebsorganes handeln kann (in der Schnittdarstellung nicht sichtbar, etwa als Elektro- oder Fluidmotor konzentrisch über der Zeichenebene gelegen).

Der vom Triebkern 14 über die radiale Stößelwirkung der Speichen 21 im Querschnitt umlaufend unrund verformte Rad-Reifen 13 steht nur in Verlängerung der größeren Radien des Triebkerns 14 längs des dort hinreichend weit radial nach außen verlagerten Bogenstückes seiner Außenmantelfläche 17 kraft oder wie skizziert über eine radiale Verzahnung 19 / 20 formschlüssig mit der formstabil hohlzylindrischen Innenmantelfläche 18 des stationären Stützringes 11 in Drehverbindung. Mit dem Drehen des Triebkernes 14 wälzt sich die umlaufend radial verformte Außenverzahnung 19 im Stützring 11 ab und vollführt aufgrund ihres kleineren Umfanges weniger als eine volle Umdrehung mit jeder Umdrehung des Triebkernes 14. Dabei kann der Reifen 13 relativ zum Innenrad 15 verdrehbar sein und das Innenrad 15 auch ganz stillstehen.

Zumindest dieser außen verzahnte Reifen 13 erstreckt sich mit seiner Verzahnung 19 unter der Zeichenebene axial noch aus dem Stützring 11 heraus in einen weiteren, dem in der Zeichnung sichtbaren Stützring 11 axial benachbarten, ebenfalls formstabil hohlzylindrischen Außenring hinein; der nun aber nicht stationär angeordnet sondern als koaxialer Abtriebsring dieses sehr stark untersetzenden Getriebes 12 von der Verzahnung 19 des Reifens 13 mitdrehbar gelagert ist. Damit die wie das Innenrad 15 gewöhnlich ebenfalls im Kunststoff-Spritzguß erstellten Außenringe (Stützring 11 und Abtriebsring) sich unter Last nicht radial aufweiten und dann ihre jeweilige Verzahnung zum Reifen 13 durchratschen lassen, ist sind sie zweckmäßigerweise durch nachträglich aufgezogene oder besser gleich eingeformte Armierungsringe etwa aus Metall formstabilisiert (aus der Schnittebene der Zeichnung nicht ersichtlich).

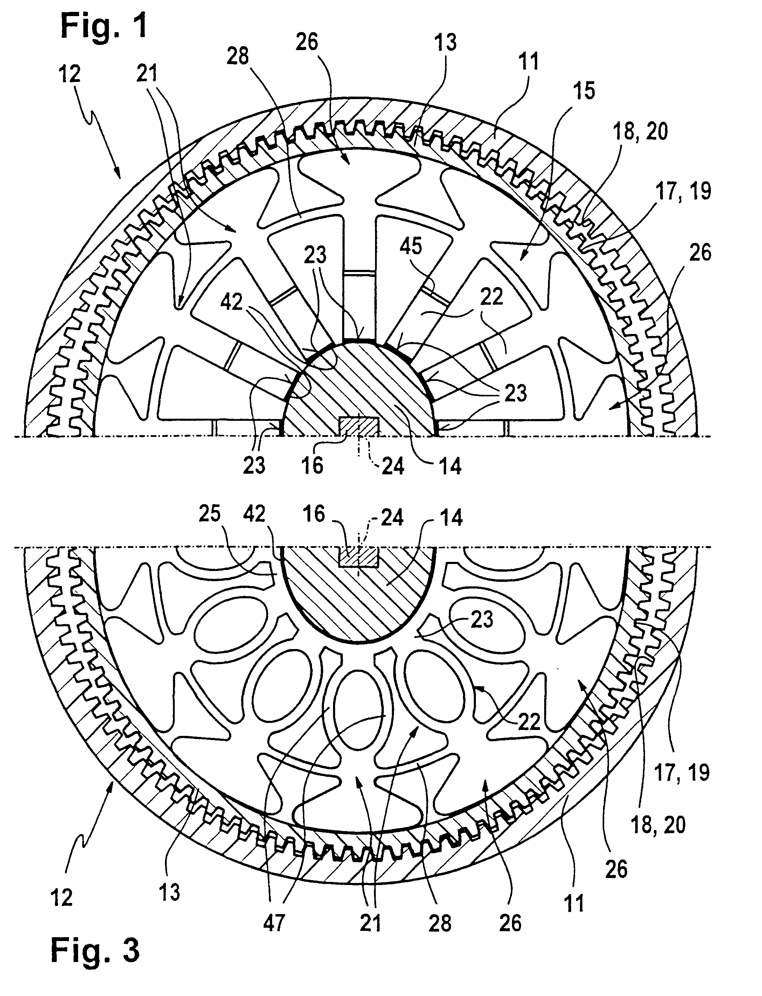

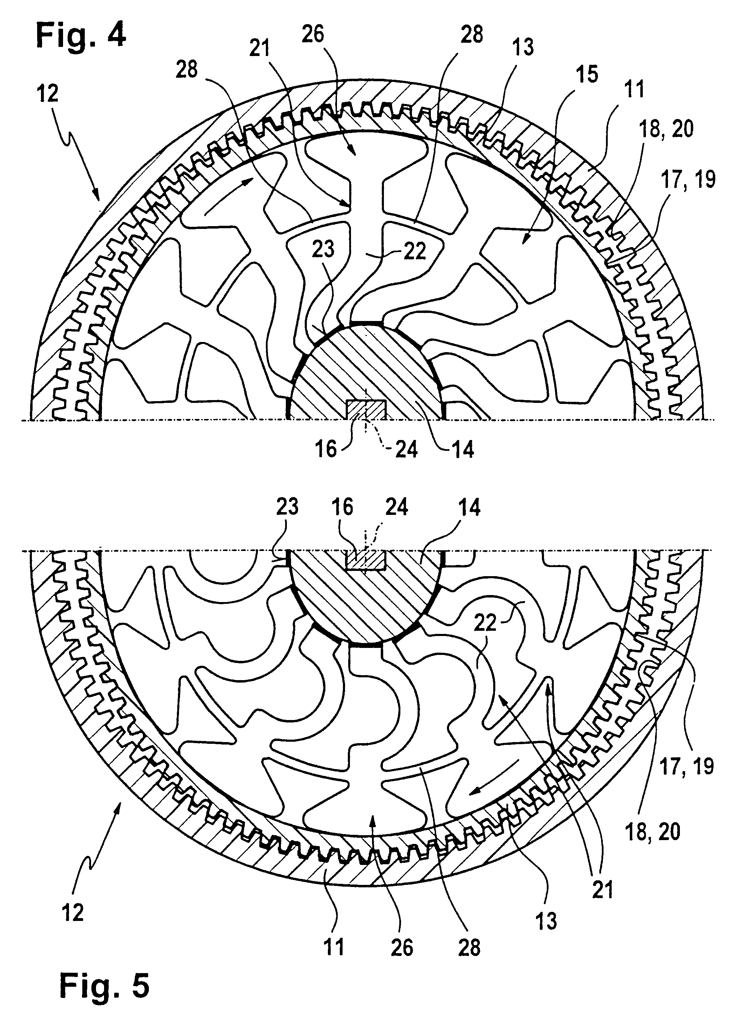

Das axial lange und radial breite, radial verformbare Innenrad 15 ist aus einer Anzahl untereinander gleicher, strahlenförmig nebeneinanderliegend beweglich miteinander verbundener stößelartiger Speichen 21 zusammengefügt. Jede dieser an sich formstabilen Speichen 21 besteht vor allem aus einem quaderförmigen, sich etwa über die axiale Länge des Triebkerns 14 und damit des Innenrades 15 und seines Reifens 13 erstreckenden Schaft 22, der mit seinem Fuß 23 entweder gemäß Fig.1 unmittelbar längs der Erzeugenden und in Bezug auf die Geräte-Achse 24 radial auf der im Querschnitt unrunden Außenmantelfläche des Triebkerns 14 abgestützt ist; oder der Fuß 23 wächst ähnlich Fig.3 aus einer radial verformbaren Rad-Nabe 25 radial heraus. Der Anlagebereich jeden Fußes 23 bzw. die Innenmantelfläche der Nabe 25 sind zweckmäßigerweise mit einer gegenüber dem Material der Triebkern-Mantelfläche gleitfreudigen, formstabilen, abriebfesten und temperaturbeständigen Beschichtung 42 oder Einlage ausgestattet.

Dem Fuß 23 gegenüber endet jeder der an sich formstabil T-förmigen Speichen-Schäfte 22 mit einem - vorzugsweise etwas radial elastisch stauchbaren - Kopf 26, der den Reifen 13 drehstarr trägt oder über den der Reifen 13 mit guten Gleiteigenschaften abläuft. Der Kopf 26 hat im wesentlichen die Querschnittsform eines sich achsparallel über die Länge des Triebkerns 14 und damit die achsparallele Länge des Schaftes 22 erstreckenden Zylinderoder Hohlzylinder-Ausschnittes. Entgegen diesem Ausführungsbeispiel muß aber vom Innenrad 15 kein gesonderter, lokal umlaufend radial aufweitbarer Reifen 13 getragen werden, sondern die distanzierte periphere Folge der Köpfe 26 kann auch direkt als in Umfangsrichtung unterbrochene, mit Außenverzahnung 19 ausgestattete, umlaufend in die Innenmantelfläche 18 des Stützrings 11 radial eingedrückte Außenmantelfläche 17 eines Innenrades 15 mit einstückig damit ausgebildetem Radreifens (13) dienen.

Die seitliche Abstützung der Speichen 21 in ihrer peripheren Folge gegeneinander, und damit zugleich deren kreisförmige Positionierung und bewegliche Verbindung zum zusammengesetzten Innenrad 15, kann mittels seitlich einander gegenüber an den jeweiligen Schaft 22 vorzugsweise einstückig angeformter kurzer Arme 28 erfolgen (etwa gemäß Fig.1), statt dessen oder zusätzlich aber auch mittels der Positionierung der Speichen 21 längs des Umfangs der Rad-Nabe 25 (vgl. Fig.3).

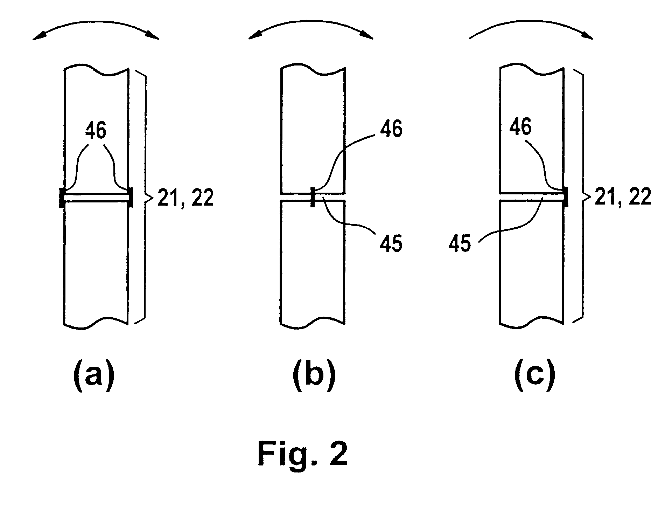

Bei Betrieb des Getriebes 12 werden die Speichen 21, welche primär die umlaufende radiale Verformungskraft vom Triebkern 14 stößelartig auf den Reifen 13 übertragen, je nach der Drehrichtung des Triebkernes 14 auch auf Biegung beansprucht. Das über das Getriebe 12 übertragbare Drehmoment wird nun erfindungsgemäß dadurch begrenzt, daß die Biegesteifigkeit der Speichen 21 gezielt geschwächt wird. Gemäß Fig.1 und Fig.2 ist dafür vorgesehen, die quaderförmigen Schäfte 22 der Speichen 21 etwa mittig, nämlich etwa bei der Hälfte ihrer radialen Längserstreckung parallel zur Getriebe-Achse 24 zu teilen und jeweils die beiden Teil-Schäfte über diese Trennfuge 45 hinweg mittels einer flexiblen Kopplung 46 miteinander zu verbinden. Für Fig.2 (a) bzw. (b) sind elastisch dehnbare Kopplungen 46 für diese Überbrückungen vorgesehen, von denen zwei an den beiden Enden der Teilungsfuge 45 bzw. eine im Verlaufe der Teilungsfuge 45 angeordnet sind. Dadurch ist (gemäß Pfeilangabe in der Zeichnung) ein Verschwenken der beiden Teile des Schaftes 22 gegeneinander unter gegenseitiger Abstützung der einander gegenüberstehenden Stirnflächen an der Teilungsfuge 45 ermöglicht, wenn die Drehmomentenbeanspruchung zwischen Triebkern 14 und Stützring 11 einen konstruktiv vorgegebenen Ansprechwert überschreitet. Dieser Ansprechwert ist beeinflußbar über die Lage, Richtung und Geometrie der Teilungsfuge 45 im Schaft 22 sowie über das Dehnungsverhalten der Kopplungen 46 relativ zueinander (a) bzw. über die Lage der Kopplung im Innern der Teilungsfuge 45 (b). Dadurch kann auch vorgegeben werden, daß die Lastbegrenzung in einer Drehrichtung anders als in der entgegengesetzten Drehrichtung ausfällt; um etwa beim Betrieb einer Anlage die Arbeitslast auf einen funktionsunkritschen Wert zu begrenzen, aber bei Auftreten eines Störfalles eine Zurückbewegung unter voller Leistung sicherzustellen. Für eine reine Freilauffunktion genügt es, gemäß Fig.2 (c) am in Drehrichtung liegenden Ende der Teilungsfuge 45 eine Kopplung ohne Elastizität, also ein einfaches Biegescharnier auszubilden, das bei einer Rückwärtsbewegung (der Pfeilangabe in der Zeichnung entgegen) die Stirnflächen beiderseits der Teilungsfuge 45 auseinanderklappen läßt und dadurch infolge Verkürzung der wirksamen radialen Länge der Speiche 21 die Verzahnung 19 / 20 außer Eingriff nimmt. Die elastischen oder nur biegeweichen Kopplungen 46 zur Überbrückung der Teilungsfugen 45 können als gesonderte Konstruktionselemente appliziert werden; sie sind aber auch einfach als Filmstreifen zwischen den Teil-Schäften 22 im Zuge der Spritzguß-Fertigung integrierbar.

Bei der Variante gemäß Fig.3 ist der Schaft 22 der Speichen 21 entgegen Fig.1/2 (a, b, c) nicht mehr quer zu ihrer Längserstreckung, sondern in Abwandlung von Fig.2 (a) über einen Teil ihrer radialen Längserstreckung zu zwei seitlichen Zweigen 47 längsgeteilt, um eine definiert biegeweiche Zone etwa im Mittenbereich des Schaftes 22 einzustellen. Diese Zone kann wieder, nun etwa durch unterschiedliche Stärke beider parallelen Zweige 47 des längsgeteilten Schaftes 22, für die beiden Drehrichtungen unterschiedlich dimensioniert sein.

Im Extremfall entfällt einer der Parallelzweige 47 ganz, so daß sich für die Schäfte 22 Geometrien etwa gemäß Fig.4 und schließlich der in Arbeitsdrehrichtung voreilend geschwungene Verlauf der Speichen 21 gemäß Fig.5 ergeben. Das sind Innenräder 15 mit Freilaufeigenschaft in der entgegengesetzten Drehrichtung, die nicht (wie die durch den jeweiligen Pfeil angegebene Arbeitsrichtung) zu einem radialen Aufspreizen der Außenmantelfläche 17 für das lokale Einschmiegen des Reifens 13 in den Stützring 11 führt. Dabei kann außer über die Geometrie des voreilenden Verlaufes dieser Speichen 21 auch über die im Getriebe-Querschnitt radiale Lage und über die Steifigkeit der peripheren Verbindungs-Arme 28 zwischen den Speichen 21 das Ansprechverhalten der Freilaufeigenschaft bei sich umkehrenden Drehmoment konstruktiv beeinflußt werden.

So läßt sich ein Wellgetriebe 12 erfindungsgemäß durch gezielt drehmomenten- oder drehrichtungsabhängig verformbare, also biegeweiche Speichen 21 seines Innenrades 15 mit konstruktiv leicht beeinflußbarer Überlastsicherung und Freilaufeigenschaft ausstatten. Dafür werden die Speichen-Schäfte 22 quer zu der oder in der Radialrichtung bezüglich der Getriebeachse 24 geteilt. Diese Teilung ist in Umfangsrichtung des Innenrades 15 biegsam überbrückt, um bei Auftreten entsprechender Biegebeanspruchung durch Einknikken des Schaftes 22 die wirksame Länge der Speiche 21 in radialer Richtung bezüglich der Achse 24 zu verringern und so den in Verlängerung der Speiche 21 lokalen Verzahnungseingriff 19-20 zwischen Innenrad-Reifen 13 und äußerem Stützring 11 aufzuheben. Die Kopplungen 46 bzw. Zweige 47 zur Überbrückung der Speichenteilung können für beide Drehrichtungen unterschiedlich ausgelegt sein, um unterschiedliches Ansprechverhalten bis hin zur richtungsabhängigen Freilaufeigenschaft bei nur in einer Beanspruchungsrichtung biegesteifen Speichen 21, z.B. bei bezüglich der Radialen stark unsymmetrischem Verlauf des Speichenschaftes 22 zu erzielen.

## Patentansprüche

1. Wellgetriebe (12) mit einem um seine Achse (24) rotierenden Triebkern (14) unrunden Querschnittes zum koaxialen Abwälzen des Radreifens (13) eines ihn umgebenden, radial verformbaren speichenradförmigen Innenrades (15) in einem formstabilen Stützring (11) etwas größeren Durchmessers, wobei das Innenrad (15) für eine Drehmomentenbegrenzung mit drehmomentenabhängig nicht-biegesteifen Speichen (21) ausgestattet ist, **dadurch gekennzeichnet, daß** die Speichen (21) quer zur Längserstreckung ihrer Schäfte (22) von einer biegsam überbrückten Trennfuge (45) geteilt sind.

2. Radial verformbares, speichenradförmiges Innenrad (15), mit drehmomentabhängig nicht-biegesteifen Speichen (21), für ein Wellgetriebe (12) nach Anspruch 1, **dadurch gekennzeichnet, daß** es mit, quer zur Längserstreckung ihrer Schäfte (22) von einer biegsam überbrückten Trennfuge (45), geteilten Speichen (21) ausgestattet ist.

3. Innenrad nach dem vorangehenden Anspruch, **dadurch gekennzeichnet, daß** die Überbrückung wenigstens eine elastisch dehnbare Kopplung (46) aufweist.

4. Innenrad nach dem vorangehenden Anspruch, **dadurch gekennzeichnet, daß** die Überbrückung wenigstens eine elastisch dehnbare Kopplung (46) im Verlaufe der Trennfuge (45) aufweist.

5. Innenrad nach dem vorangehenden Anspruch, **dadurch gekennzeichnet, daß** die Überbrückung wenigstens eine biegsame Kopplung (46) an wenigstens einem Ende der Trennfuge (45) ist.

6. Innenrad nach wenigstens einem der drei vorangehenden Ansprüche, **dadurch gekennzeichnet, daß** die Kopplung (46) drehrichtungsabhängig anspricht.

7. Innenrad nach dem vorangehenden Anspruch, **dadurch gekennzeichnet, daß** die Überbrückung je eine elastisch dehnbare Kopplung (46) in und gegen Drehrichtung des Radreifens (13) etwa bei den beiden Enden der Trennfuge (45) aufweist, die unterschiedlich ausgelegt sind.

8. Innenrad nach einem der Ansprüche 2 bis 7, **dadurch gekennzeichnet, daß** die Überbrückung ein Kunststoff-Film ist.

9. Radial verformbares, speichenradförmiges Innenrad (15), mit drehmomentabhängig nicht-biegesteifen Speichen (21), für ein Wellgetriebe (12) nach Anspruch 1, **dadurch gekennzeichnet, daß** die Speichen in Längsrichtung ihrer Schäfte (22) in wenigstens zwei parallele Zweige (47) geteilt sind.

10. Radial verformbares, speichenradförmiges Innenrad (15), mit drehmomentabhängig nicht-biegesteifen Speichen (21), für ein Wellgetriebe (12) nach Anspruch 1, **dadurch gekennzeichnet, daß** die Speichen (21) aus der Radialen auf seine Achse (24) in und/oder gegen die Drehrichtung seines Radreifens (13) heraus geschwungen verlaufen.

## Claims

1. A harmonic drive (12) including a drive hub (14) that has a non-circular cross section and rotates about its own axis (24) to coaxially rotate the wheel rim (13) of a radially deformable, internal geared wheel (15) with spoked conformation encircling the hub inside a non-deformable bearing ring (11) of somewhat larger diameter, wherein the internal geared wheel (15) is equipped for torque limiting, with spokes that are flexurally non-rigid according to the torque applied, **characterised in that** the spokes are separated transversely to the longitudinal extension of their shafts (22) by flexibly bridged slits.

2. A radially deformable internal geared wheel (15) with spoked conformation having spokes (21) that are flexurally non-rigid according to the torque applied, for a harmonic drive (12) as claimed in claim 1, **characterised in that** it is equipped with spokes (21) that are separated transversely to the longitudinal extension of their shafts (22) by a flexibly bridged slit.

3. The internal geared wheel as claimed in the preceding claim, **characterised in that** the bridging arrangement has at least one elastically extensible coupling (46).

4. The internal geared wheel (15) as claimed in the preceding claim, **characterised in that** the bridging arrangement has at least one elastically extensible coupling (46) over the extent of the slit (45).

5. The internal geared wheel as claimed in the preceding claim, **characterised in that** the bridging arrangement is at least one flexible coupling (46) located on at least one end of the slit (45).

6. The internal geared wheel as claimed in at least one of the three preceding claims, **characterised in that** the engagement of the coupling (46) is determined by the direction of rotation.

7. The internal geared wheel as claimed in the preceding claim, **characterised that** the bridging member is furnished with one elastically extensible coupling (46) each, in and counter to the direction of rotation of the wheel rim (13), approximately at both ends of the slit (45), which are of different shapes.

8. The internal geared wheel as claimed in any of claims 2 to 7, **characterised in that** the bridging member is a plastic film.

9. The radially deformable internal geared wheel (15) with spoked conformation having spokes (21) that are flexurally non-rigid according to the torque applied, for a harmonic drive (12) as claimed in claim 1, **characterised in that** the spokes (21) are split into at least two parallel branches in the longitudinal extension of their shafts (22).

10. The radially deformable internal geared wheel (15) with spoked conformation having spokes (21) that are flexurally non-rigid according to the torque applied, for a harmonic drive (12) as claimed in claim 1, **characterised in that** the spokes (21) are flicked out of the wheel structure on its axis in and/or against the direction of rotation of the wheel rim (13) thereof.

## Revendications

1. Réducteur à planétaire (12) avec un noyau central moteur (14) tournant autour de son axe (24) de section ovale pour le déroulement coaxial du pneu de roue (13), d'une roue intérieure (15) en forme de roue à rayon, déformable au plan radial et entourant le pneu, dans une bague d'appui (11) indéformable de diamètre légèrement supérieur, la roue intérieure (15) étant équipée pour une limitation du couple de rayons non résistants à la flexion en fonction du couple, **caractérisé en ce que** les rayons (21) sont divisés transversalement à l'extension longitudinale de leurs tiges (22) par un joint de séparation (45) pouvant être surmonté de façon souple.

2. Roue intérieure (15) déformable au plan radial, en forme de roue à rayons, avec des rayons (21) non résistants à la flexion en fonction du couple, pour un réducteur à planétaire (12) selon la revendication 1, **caractérisée en ce qu'**elle est équipée de rayons (21) divisés transversalement à l'extension longitudinale de leurs tiges (22) par un joint de séparation pouvant être surmonté de façon souple.

3. Roue intérieure selon la revendication précédente, **caractérisée en ce que** le dispositif en superposition présente au moins un accouplement (46) élastiquement extensible.

4. Roue intérieure selon la revendication précédente, **caractérisée en ce que** le dispositif en superposition présente au moins un accouplement (46) élastiquement extensible sur le tracé du joint de séparation (45).

5. Roue intérieure selon la revendication précédente, **caractérisée en ce que** le dispositif en superposition présente au moins un accouplement (46) souple sur au moins une extrémité du joint de séparation (45).

6. Roue intérieure selon au moins l'une quelconque des trois revendications précédentes, **caractérisée en ce que** l'accouplement (46) réagit en fonction du sens de rotation.

7. Roue intérieure selon la revendication précédente, **caractérisée en ce que** le dispositif en superposition présente respectivement un accouplement (46) élastiquement extensible dans et contre le sens de rotation du pneu de roue (13) à peu près sur les deux extrémités du joint de séparation, qui sont conçues différemment.

8. Roue intérieure selon l'une quelconque des revendications 2 à 7, **caractérisée en ce que** le dispositif en superposition est un film plastique.

9. Roue intérieure (15) déformable au plan radial et en forme de roue à rayons, avec des rayons (21) non résistants à la flexion en fonction du couple, pour un réducteur à planétaire (12) selon la revendication 1, **caractérisée en ce que** les rayons sont divisés dans la direction longitudinale de leurs tiges (20) en au moins deux branches (47) parallèles.

10. Roue intérieure (15) déformable au plan radial et en forme de roue à rayons, avec des rayons (21) non résistants au pliage en fonction du couple, pour un réducteur à planétaire (12) selon la revendication 1, **caractérisée en ce que** les rayons (21) sont agencés de façon courbée à partir de la droite radiale sur son axe (24) dans et/ou contre le sens de rotation de son pneu de roue (13).
